# EUROPEAN PATENT SPECIFICATION

(11) **EP 1 976 143 B1**
(45) Date of publication and mention of the grant of the patent: **04.11.2015**
(21) Application number: 08005914.0
(22) Date of filing: 27.03.2008
(51) Int. Cl.: H04W 52/20, H04W 24/10, H04W 52/32, H04W 52/36, H04W 72/04, H04W 88/08

(54) **Radio base station apparatus, resource allocation method and resource allocation program**
Funkbasisstationsvorrichtung, Ressourcenzuweisungsverfahren und Ressourcenzuweisungsprogramm
Appareil de station de base radio, procédé d'affectation de ressources et programme d'affectation de ressources

(30) Priority: 28.03.2007 JP 2007084463
(43) Date of publication of application: 01.10.2008
(73) Proprietor: NEC Corporation, Minato-ku Tokyo 108-8001 (JP)
(72) Inventor: Ishizaki, Ryuichiro, Tokyo 108-8001 (JP)
(74) Representative: Glawe, Delfs, Moll

(56) References cited:
- EP-A1- 1 689 133
- EP-A2- 1 467 500
- WO-A1-2006/089476
- WO-A1-2006/118491

## Description

### Background of the Invention

### 1. Field of the invention

The present invention relates to a technique for allocating a resource to HS-PDSCH (High Speed Physical Downlink Shared Channel) used for data transmission to a mobile station in a radio base station apparatus.

### 2. Description of the Related Art

A radio base station apparatus according to the preamble of claim 1 is known from WO 2006/118 491 A1.

3GPP (the third-generation partnership project) has defined the specifications of HSDPA (High Speed Downlink Packet Access).

According to HSDPA, a radio base station apparatus transmits data via HS-PDSCH to UE (User Equipment).

Also, according to HSDPA, as an index indicating downlink transmission quality, there is used CQI (Channel Quality Indicator) calculated by UE. This CQI is reported via HS-DPCCH (High Speed Dedicated Physical Control Channel) to the radio base station apparatus; and the radio base station apparatus performs, based on CQI reported from UE, resource allocation to HS-PDSCH (for example, refer to Japanese Patent Laid-Open No. 2006-217190).

Meanwhile, 3GPP TS25.141 permits an error range of plus-minus 2 dB for CQI reported from UE to a radio base station apparatus.

Accordingly, when the radio base station apparatus directly uses the value of CQI reported from UE, proper resource allocation cannot be performed. Consequently, the UE side cannot properly receive data from the radio base station apparatus, thus causing lowering of throughput in the radio base station apparatus.

### Summary of the Invention

An object of the present invention is to provide a radio base station apparatus, resource allocation method and resource allocation program which can prevent the lowering of throughput.

To achieve the above object, according to the present invention, there is provided a radio base station apparatus according to claim 1 that allocates a resource to HS-PDSCH and transmits data via the HS-PDSCH to a mobile station.

To achieve the above object, according to the present invention, there is provided a resource allocation method according to claim 6 used by a radio base station apparatus that allocates a resource to HS-PDSCH and transmits data via the HS-PDSCH to a mobile station.

To achieve the above object, according to the present invention, there is provided a resource allocation program that executes the resource allocation method according to the invention.

According to the present invention, when the measured BLER is equal to or larger than a target value, the radio base station apparatus increases the transmit power allocated to HS-PDSCH.

Consequently, the mobile station side can properly receive data from the radio base station apparatus, so that the number of transmissions of NACK information to the radio base station apparatus is minimized. As a result, the number of data retransmissions from the radio base station apparatus to the mobile station in MAC-hs layer can be reduced, so the lowering of throughput in the radio base station apparatus can be prevented.

The above and other objects, features, and advantages of the present invention will become apparent from the following description with reference to the accompanying drawings which illustrate examples of the present invention.

### Brief Description of the Drawings

Fig. 1 is a view for explaining a technique of communication performed between a radio base station apparatus and UE according to an exemplary embodiment of the present invention;
Fig. 2 is a block diagram illustrating an internal configuration of the radio base station apparatus illustrated in Fig. 1;
Fig. 3 is a flowchart for explaining the operation of the radio base station apparatus illustrated in Fig. 1 that varies the transmit power allocated to HS-PDSCH; and
Fig. 4 is a flowchart for explaining the operation of the radio base station apparatus illustrated in Fig. 1 that varies another resource allocated to HS-PDSCH when the increased amount of transmit power allocated to HS-PDSCH exceeds an upper limit.

### Description of the Preferred Embodiments

Preferred embodiments of the present invention will be described below with reference to the drawings.

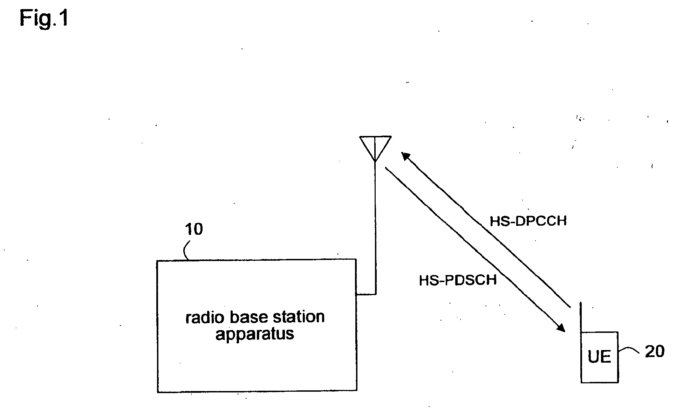

Fig. 1 is a view for explaining a technique of communication performed between radio base station apparatus 10 and UE (mobile station) 20 according to an exemplary embodiment.

Referring to Fig. 1, in the downlink, radio base station apparatus 10 transmits data via HS-PDSCH to UE 20.

In the uplink, UE 20 transmits via HS-DPCCH to radio base station apparatus 10, the aforementioned CQI or ACK (Acknowledgement)/NACK (Negative ACK) information indicating whether or not the data from radio base station apparatus 10 has been properly received.

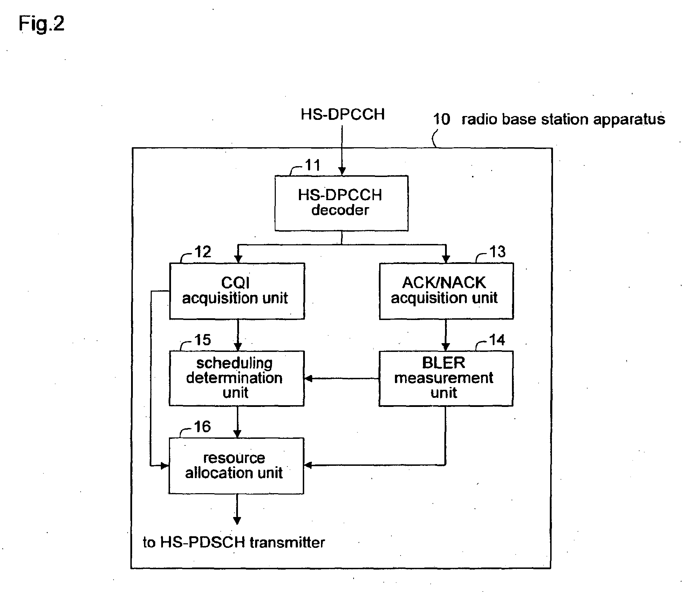

Fig. 2 is a block diagram illustrating an internal configuration of radio base station apparatus 10. Here, Fig. 2 illustrates only a part thereof relating to the present invention, and the other part is omitted.

Referring to Fig. 2, radio base station apparatus 10 includes HS-DPCCH decoder 11, CQI acquisition unit 12, ACK/NACK acquisition unit 13, BLER measurement unit 14, scheduling determination unit 15 and resource allocation unit 16.

HS-DPCCH decoder 11 decodes a signal received via HS-DPCCH from UE 20.

CQI acquisition unit 12 acquires the CQI contained in the received signal decoded by HS-DPCCH decoder 11.

ACK/NACK acquisition unit 13 acquires ACK/NACK information contained in the received signal decoded by HS-DPCCH decoder 11.

BLER measurement unit 14 measures BLER of the signal received via HS-DPCCH from UE 20.

Scheduling determination unit 15 performs scheduling for UE 20 to which resource allocation unit 16 allocates a resource. For example, when UE 20 starts HSDPA service, scheduling determination unit 15 determines on execution of resource allocation to UE 20.

When scheduling determination unit 15 determines on execution of resource allocation to UE 20, resource allocation unit 16 allocates based on the CQI acquired by CQI acquisition unit 12, as a resource, the data transmit power, data TBS (Transport Block Size), data modulation scheme and the number of data codes used in HS-PDSCH. In this case, the resource allocated to HS-PDSCH can be calculated by any method. For example, as the method for calculating transmit power allocated to HS-PDSCH, there is one that uses a formula, described in 3GPP TS25.214, "Primary-CPICH in the cell + Measurement Power Offset + Reference Power Offset corresponding to the received CQl ".

Further, when BLER measured by BLER measurement unit 14 is equal to or larger than target BLER that becomes the target value of BLER, resource allocation unit 16 reallocates a resource to HS-PDSCH, that is, increases the transmit power allocated to HS-PDSCH stepwise by a given amount.

Here, in radio base station apparatus 10, taking into account an error of the CQl reported from UE 20, there is defined an upper limit (for example, 2 dB) for the increased amount of transmit power allocated to HS-PDSCH.

There may be a case where, as a result of resource allocation unit 16 increasing the transmit power allocated to HS-PDSCH, even when the increased amount of transmit power reaches the upper limit, the measured BLER is equal to or larger than the target BLER. In this case, resource allocation unit 16 determines that the error of the CQl has exceeded a tolerance level, and varies another resource (TBS, modulation scheme, the number of codes) other than the transmit power allocated to HS-PDSCH.

An HS-PDSCH transmitter (not illustrated) transmits data to UE 20 via HS-PDSCH in which the resource has been allocated by resource allocation unit 16.

The resource allocation operation by radio base station apparatus 10 will be described below. Here, on the assumption that UE 20 has started HSDPA service and thus a resource has been allocated to HS-PDSCH, the subsequent operation will be described.

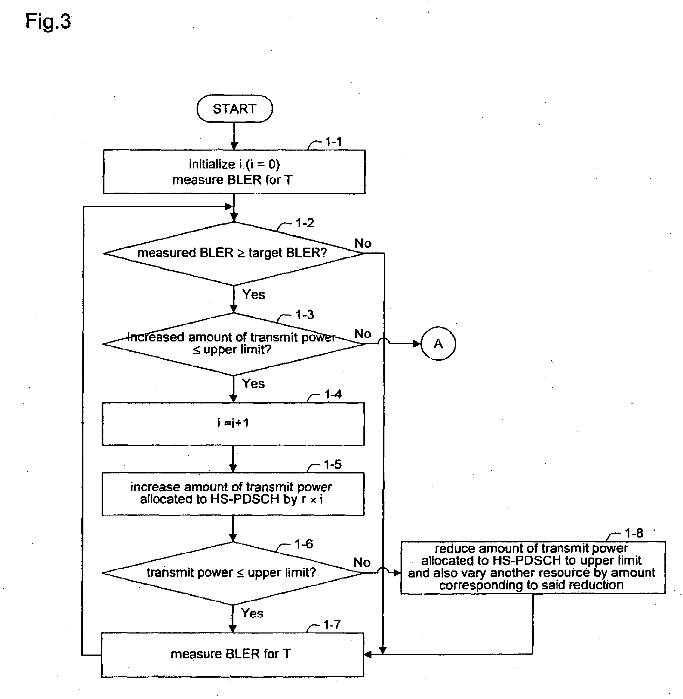

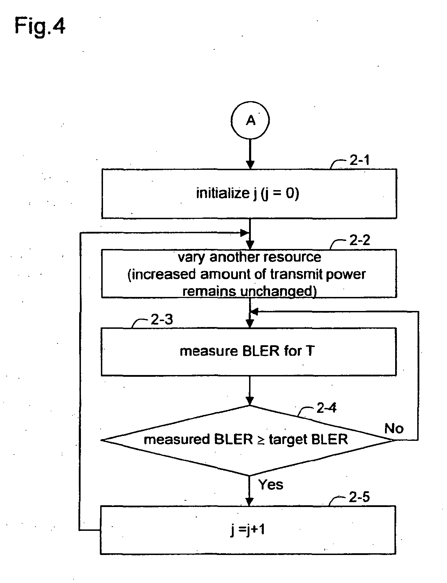

Fig. 3 is a flowchart for explaining the operation of radio base station apparatus 10 that varies the transmit power allocated to HS-PDSCH; and Fig. 4 is a flowchart for explaining the operation of radio base station apparatus 10 that varies another resource allocated to HS-PDSCH when the increased amount of transmit power allocated to HS-PDSCH exceeds an upper limit.

In Figs. 3 and 4, the following coefficients are used.
i: the number of steps in which the transmit power allocated to HS-PDSCH is varied stepwise
r: the increased amount of transmit power allocated to the units corresponding to the number of steps i
j: the number of steps in which another resource allocated to HS-PDSCH is varied stepwise
T: length of time for which BLER is measured
Qmax: the upper limit of the increased amount of transmit power allocated to HS-PDSCH
Pmax: the upper limit of transmit power allocatable to HS-PDSCH

Here, r, Qmax and target BLER are preliminarily stored in resource allocation unit 16, or set from the outside into resource allocation unit 16. T is preliminarily stored in BLER measurement unit 14, or set from the outside into BLER measurement unit 14.

Referring to Fig. 3, firstly in step 1-1, resource allocation unit 16 initializes the number of steps i (i = 0). Also, BLER measurement unit 14 measures the BLER of a received signal for T.

Subsequently, in step 1-2, resource allocation unit 16 compares the measured BLER obtained in step 1-1 with the target BLER. If the measured BLER is equal to or larger than the target BLER, the operation proceeds to step 1-3. On the other hand, if the measured BLER is smaller than the target BLER, the operation proceeds to step 1-7.

In step 1-3, resource allocation unit 16 compares the increased amount of transmit power allocated to HS-PDSCH with upper limit Qmax. Here, the increased amount of transmit power is expressed as r x i. If the increased amount of transmit power exceeds Qmax, resource allocation unit 16 determines that the error of the CQl exceeds the tolerance level, and the operation proceeds to step 2-1 of Fig. 2. On the other hand, if the increased amount of transmit power is equal to or smaller than Qmax, the operation proceeds to step 1-4.

In step 1-4., resource allocation unit 16 increments the number of steps i by one. Subsequently, in step 1-5, resource allocation unit 16 increases transmit power actually allocated to HS-PDSCH by r x i.

Subsequently, in step 1-6, resource allocation unit 16 compares the transmit power (containing the increased amount in step 1-5) actually allocated to HS-PDSCH with upper limit Pmax of transmit power allocatable to HS-PDSCH. Here, Pmax is determined by taking into consideration the other channels. If the transmit power is Pmax or less, the operation proceeds to step 1-7. On the other hand, if the transmit power exceeds Pmax, the operation proceeds to step 1-8.

In step 1-8, resource allocation unit 16 reduces the transmit power allocated to HS-PDSCH to Pmax, and varies another resource (TBS, the number of codes, modulation scheme) in 3GPP TS25.141 table by an amount corresponding to the reduction, and the operation proceeds to step 1-7. For example, when the reduced amount of transmit power is 2 dB, TBS or the number of codes is increased by an amount corresponding to 2dB, or a change is made to a modulation scheme which can compensate for an amount corresponding to 2dB. Here, all of TBS, the modulation scheme and the number of codes don't need to be varied; it is sufficient that at least one of them (TBS, the modulation scheme, the number of codes) is varied.

In step 1-7, BLER measurement unit 14 measures the BLER of a received signal for T, and then the operation returns to step 1-2.

Referring to Fig. 4, when the increased amount of transmit power allocated to HS-PDSCH exceeds Qmax in step 1-3 of Fig. 3, firstly in step 2-1, resource allocation unit 16 initializes the number of steps j. In this case, since the measured BLER is equal to or larger than the target BLER, the operation starts with the number of steps j set to 1.

Subsequently, in step 2-2, resource allocation unit 16 varies another resource (TBS, the number of codes, the modulation scheme) other than the transmit power allocated to HS-PDSCH. In this case, while the increased amount of transmit power remains unchanged, another resource (TBS, the number of codes, the modulation scheme) is varied with an offset corresponding to j applied thereto in 3GPP TS25.141 table. For example, TBS or the number of codes is reduced by an amount corresponding to j, or a change is made to a modulation scheme corresponding to j. Here, all of TBS, the modulation scheme and the number of codes don't need to be varied; it is sufficient that at least one of them (TBS, the modulation scheme, the number of codes) is varied.

Subsequently, in step 2-3, BLER measurement unit 14 measures the BLER of a received signal for T. Subsequently, in step 2-4, resource allocation unit 16 compares the measured BLER obtained in step 2-3 with target BLER. If the measured BLER is equal to or larger than the target BLER, the operation proceeds to step 2-5. On the other hand, if the measured BLER is smaller than the target BLER, the operation returns to step 2-3.

In step 2-5, resource allocation unit 16 increments the number of steps j by one, and the operation returns to step 2-2.

As described above, according to the present exemplary embodiment, when the measured BLER is equal to or larger than the target BLER, radio base station apparatus 10 increases the transmit power allocated to HS-PDSCH.

Consequently, the UE 20 side can properly receive data from radio base station apparatus 10, so that the number of transmissions of NACK information to radio base station apparatus 10 is minimized. As a result, the number of data retransmissions from radio base station apparatus 10 to UE 20 in MAC-hs layer can be reduced, so lowering of the throughput in radio base station apparatus 10 can be prevented.

Also, according to the present exemplary embodiment, taking into consideration an error of the CQI, an upper limit is defined for the increased amount of transmit power by radio base station apparatus 10. And when the measured BLER is still equal to or larger than the target BLER after the increased amount of transmit power has reached the upper limit, radio base station apparatus 10 determines that the error of the CQI exceeds the tolerance level, and varies another resource allocated to HS-PDSCH.

Consequently, even when UE 20 reports excessively high CQI with the tolerance level of error thereof exceeded, radio base station apparatus 10 can perform resource allocation in a proper range, thus allowing prevention of the lowering of throughput in radio base station apparatus 10.

It is noted that radio base station apparatus 10 is implemented by using the above described dedicated hardware, but may also be implemented by recording a program for implementing such function onto a computer readable recording medium, and by causing a computer acting as radio base station apparatus 10 to read and execute the program recorded on this recording medium. The computer readable recording medium includes a recording medium such as a floppy disk, magnetooptic disk or CD-ROM, and a storage apparatus such as a hard disk apparatus incorporated in a computer. Further, the computer readable recording medium includes a medium (transmission medium or transmission wave) that dynamically holds a program for a short length of time such as a case where the program is transmitted via the Internet, and a medium that holds a program for a given length of time such as a volatile memory in the computer.

While the invention has been particularly shown and described with reference to exemplary embodiments thereof, the invention is not limited to these embodiments.

## Claims

1. A radio base station apparatus adapted to allocate a resource to a downlink data transmission channel HS-PDSCH and transmits data via the downlink data transmission channel HS-PDSCH to a mobile station, the apparatus comprising:
an error rate BLER measurement unit adapted to measure the error rate BLER of a signal received from the mobile station; and
a resource allocation unit adapted to, when the measured error rate BLER is equal to or larger than a target value, increase stepwise by a given amount, the amount of data transmit power allocated as the resource to the downlink data transmission channel HS-PDSCH, **characterized in that** the resource allocation unit is further adapted to,
when the measured error rate BLER is equal to or larger than the target value after the increased amount of transmit power allocated to the downlink data transmission channel HS-PDSCH has reached an upper limit thereof, vary another resource other than the amount of transmit power allocated to the downlink data transmission channel HS-PDSCH.

2. The radio base station apparatus according to claim 1, wherein if the transmit power exceeds the maximum transmit power of the radio base station apparatus when allocating the transmit power to the downlink data transmission channel, the resource allocation unit is adapted to vary another resource other than the amount of transmit power allocated to the downlink data transmission channel.

3. The radio base station apparatus according to claim 1 or 2, wherein the resource allocation unit is adapted to reduce data TBS allocated as said another resource to the downlink data transmission channel HS-PDSCH.

4. The radio base station apparatus according to claim 1 or 2, wherein the resource allocation unit is adapted to reduce the number of data codes allocated as said another resource to the downlink data transmission channel HS-PDSCH.

5. The radio base station apparatus according to claim 1 or 2, wherein the resource allocation unit is adapted to change a data modulation scheme allocated as said another resource to the downlink data transmission channel HS-PDSCH.

6. A resource allocation method used by a radio base station apparatus that allocates a resource to a downlink data transmission channel HS-PDSCH and transmits data via the downlink data transmission channel HS-PDSCH to a mobile station, the method comprising:
causing the radio base station apparatus to measure the BLER of a signal received from the mobile station; and
when the measured BLER is equal to or larger than a target value, causing the radio base station apparatus to increase stepwise by a given amount, the amount of data transmit power allocated as the resource to the downlink data transmission channel HS-PDSCH **characterized in that** the method further comprises:
varying another resource other than the amount of transmit power allocated to the downlink data transmission channel HS-PDSCH, when the measured BLER is equal to or larger than the target value after the increased amount of transmit power allocated to the downlink data transmission channel HS-PDSCH has reached an upper limit thereof.

7. The resource allocation method according to claim 6, wherein if the transmit power exceeds the maximum transmit power of the radio base station apparatus when allocating the transmit power to the downlink data transmission channel, the resource allocation unit varies another resource other than the amount of transmit power allocated to the downlink data transmission channel.

8. The resource allocation method according to claim 6 or 7, wherein in said another resource allocation, TBS allocated as said another resource to the downlink data transmission channel HS-PDSCH is reduced.

9. The resource allocation method according to claim 6 or 7, wherein in said another resource allocation, the number of data codes allocated as said another resource to the downlink data transmission channel HS-PDSCH is reduced.

10. The resource allocation method according to claim 6 or 7, wherein in said another resource allocation, a data modulation scheme allocated as said another resource to the (downlink data transmission channel) HS-PDSCH is changed.

11. A resource allocation program that causes a computer acting as a radio base station apparatus that to execute the method according to any of claims 6 to 10.

## Patentansprüche

1. Funk-Basisstationsgerät, das zur Zuweisung einer Ressource an einen Downlink-Datenübertragungskanal HS-PDSCH ausgebildet ist und Daten über den Downlink-Datenübertragungskanal HS-PDSCH an eine Mobilstation überträgt, wobei das Gerät aufweist:
eine Fehlerraten-BLER-Messeinheit, die ausgebildet ist, um die Fehlerrate BLER eines Signals zu messen, das von der Mobilstation erhalten wurde, und
eine Ressourcen-Zuweisungseinheit, die ausgebildet ist, wenn die gemessene Fehlerrate BLER gleich oder größer als ein Zielwert ist, den Anteil von Datenübertragungsleistung, die als die Ressourcen dem Downlink-Datenübertragungskanal HS-PDSCH zugewiesen ist, schrittweise um einen gegebenen Anteil zu erhöhen, **dadurch gekennzeichnet, dass** die Ressourcen-Zuweisungseinheit ferner ausgebildet ist, um,
wenn die gemessene Fehlerrate BLER gleich oder größer als der Zielwert ist, nachdem der erhöhte Anteil der Übertragungsleistung, die dem Downlink-Datenübertragungskanal HS-PDSCH zugewiesen ist, seine Obergrenze erreicht hat, eine andere Ressource als den Anteil der Übertragungsleistung, die dem Downlink-Datenübertragungskanal HS-PDSCH zugewiesen ist, zu variieren.

2. Funk-Basisstationsgerät nach Anspruch 1, wobei, falls die Übertragungsleistung die maximale Übertragungsleistung der Funk-Basisstationsgerätes überschreitet, wenn die Übertragungsleistung an den Downlink-Datenübertragungskanal zugewiesen wird, die Ressourcen-Zuweisungseinheit ausgebildet ist, eine andere Ressource als den Anteil der Übertragungsleistung, die dem Downlink-Datenübertragungskanal zugewiesen ist, zu variieren.

3. Funk-Basisstationsgerät nach Anspruch 1 oder 2, wobei die Ressourcen-Zuweisungseinheit ausgebildet ist, Daten TBS, die als die andere Ressource dem Downlink-Datenübertragungskanal HS-PDSCH zugewiesen sind, zu reduzieren.

4. Funk-Basisstationsgerät nach Anspruch 1 oder 2, wobei die Ressourcen-Zuweisungseinheit ausgebildet ist, die Anzahl von Datencodes, die als die andere Ressource dem Downlink-Datenübertragungskanal HS-PDSCH zugewiesen sind, zu reduzieren.

5. Funk-Basisstationsgerät nach Anspruch 1 oder 2, wobei die Ressourcen-Zuweisungseinheit ausgebildet ist, ein Daten-Modulationsschema, das als die andere Ressource dem Downlink-Datenübertragungskanal HS-PDSCH zugewiesen ist, zu ändern.

6. Ressourcen-Zuweisungsverfahren, das von einem Funk-Basisstationsgerät verwendet wird, das Ressourcen an einen Downlink-Datenübertragungskanal HS-PDSCH zuweist und Daten über den Downlink-Datenübertragungskanal HS-PDSCH an eine Mobilstation sendet, wobei das Verfahren aufweist:
Veranlassen des Funk-Basisstationsgerätes die BLER eines Signals zu messen, das von der Mobilstation empfangen wird, und
wenn die gemessene BLER gleich oder größer ist als ein Zielwert, Veranlassen des Funk-Basisstationsgerät zum schrittweise Erhöhen um einen gegebenen Anteil des Anteils der Daten Übertragungsleistung, die als Ressource dem Downlink-Datenübertragungskanal HS-PDSCH zugewiesen ist, **dadurch gekennzeichnet, dass** das Verfahren ferner aufweist:
Variieren einer anderen Ressource als den Anteil der Übertragungsleistung, die dem Downlink-Datenübertragungskanal HS-PDSCH zugewiesen ist, wenn die gemessene BLER gleich oder kleiner ist als der Zielwert, nachdem der erhöhte Anteil von Übertragungsleistung, die dem Downlink-Datenübertragungskanal HS-PDSCH zugewiesen ist, seine obere Grenze erreicht.

7. Ressourcen-Zuweisungsverfahren nach Anspruch 6, wobei, falls die Übertragungsleistung die maximale Übertragungsleistung der Funk-Basisstationsgerätes überschreitet, wenn die Übertragungsleistung für den Downlink-Datenübertragungskanal zugewiesen wird, die Ressourcen-Zuweisungseinheit eine andere Ressource als den Anteil der Übertragungsleistung, die dem Downlink-Datenübertragungskanal zugewiesen ist, verändert.

8. Ressourcen, Zuweisungsverfahren Anspruch 6 oder 7, wobei in der anderen Ressourcenzuweisung TBS, die als die andere Ressource dem Downlink-Datenübertragungskanal HS-PDSCH zugewiesen ist, reduziert wird.

9. Ressourcen-Zuweisungsverfahren Anspruch 6 oder 7, wobei die andere Ressourcenzuweisung, die Zahl der Datencodes, die als andere Ressource dem Downlink-Datenübertragungskanal HS-PDSCH zugewiesen wird, reduziert wird.

10. Ressourcen-Zuweisungsverfahren Anspruch 6 oder 7, wobei in der anderen Ressourcenzuweisung ein Daten-Modulationsschema, das als die andere Ressource dem (Downlink-Datenübertragungskanal) HS-PDSCH zugewiesen ist, geändert wird.

11. Ressourcen-Zuweisungsprogramm, das einen Computer, der als Funk-Basisstationsgerät arbeitet, dazu veranlasst, das Verfahren nach einem der Ansprüche 6 bis 10 durchzuführen.

## Revendications

1. Appareil de station de base radio adapté pour attribuer une ressource à un canal de transmission de données en liaison descendante HS-PDSCH et transmettre des données via le canal de transmission de données en liaison descendante HS-PDSCH à une station mobile, l'appareil comprenant :
une unité de mesure de taux d'erreur BLER adaptée pour mesurer le taux d'erreur BLER d'un signal reçu depuis la station mobile ; et
une unité d'attribution de ressources adaptée, lorsque le taux d'erreur BLER mesuré est supérieur ou égal à une valeur cible, pour accroître par palier, d'une quantité donnée, la quantité de puissance de transmission de données attribuée en tant que ressource au canal de transmission de données en liaison descendante HS-PDSCH, **caractérisé en ce que** l'unité d'attribution de ressources est en outre adaptée,
lorsque le taux d'erreur BLER mesuré est supérieur ou égal à la valeur cible après que la quantité accrue de puissance de transmission attribuée au canal de transmission de données en liaison descendante HS-PDSCH a atteint une limite supérieure, pour faire varier une autre ressource que la quantité de puissance de transmission attribuée au canal de transmission de données en liaison descendante HS-PDSCH.

2. Appareil de station de base radio selon la revendication 1, dans lequel si la puissance de transmission dépasse la puissance de transmission maximale de l'appareil de station de base radio lors de l'attribution de la puissance de transmission au canal de transmission de données en liaison descendante, l'unité d'attribution de ressources est adaptée pour faire varier une autre ressource que la quantité de puissance de transmission attribuée au canal de transmission de données en liaison descendante.

3. Appareil de station de base radio selon la revendication 1 ou 2, dans lequel l'unité d'attribution de ressources est adaptée pour réduire le TBS de données attribué en tant que ladite autre ressource au canal de transmission de données en liaison descendante HS-PDSCH.

4. Appareil de station de base radio selon la revendication 1 ou 2, dans lequel l'unité d'attribution de ressources est adaptée pour réduire le nombre de codes de données attribués en tant que ladite autre ressource au canal de transmission de données en liaison descendante HS-PDSCH.

5. Appareil de station de base radio selon la revendication 1 ou 2, dans lequel l'unité d'attribution de ressources est adaptée pour modifier un schéma de modulation de données attribué en tant que ladite autre ressource au canal de transmission de données en liaison descendante HS-PDSCH.

6. Procédé d'attribution de ressources utilisé par un appareil de station de base radio qui attribue une ressource à un canal de transmission de données en liaison descendante HS-PDSCH et transmet des données via le canal de transmission de données en liaison descendante HS-PDSCH à une station mobile, le procédé comprenant les étapes consistant à :
amener l'appareil de station de base radio à mesurer le BLER d'un signal reçu depuis la station mobile ; et
lorsque le BLER mesuré est supérieur ou égal à une valeur cible, amener l'appareil de station de base radio à accroître par palier, d'une quantité donnée, la quantité de puissance de transmission de données attribuée en tant que ressource au canal de transmission de données en liaison descendante HS-PDSCH, **caractérisé en ce que** le procédé comprend en outre les étapes consistant à :
faire varier une autre ressource de la quantité de puissance de transmission attribuée au canal de transmission de données en liaison descendante HS-PDSCH, lorsque le BLER mesuré est supérieur ou égal à la valeur cible après que la quantité accrue de puissance de transmission attribuée au canal de transmission de données en liaison descendante HS-PDSCH a atteint une limite supérieure.

7. Procédé d'attribution de ressources selon la revendication 6, dans lequel si la puissance de transmission dépasse la puissance de transmission maximale de l'appareil de station de base radio lors de l'attribution de la puissance de transmission au canal de transmission de données en liaison descendante, l'unité d'attribution de ressources fait varier une autre ressource que la quantité de puissance de transmission attribuée au canal de transmission de données en liaison descendante.

8. Procédé d'attribution de ressource selon la revendication 6 ou 7, dans lequel dans ladite autre attribution de ressources, le TBS attribué en tant que ladite autre ressource au canal de transmission de données en liaison descendante HS-PDSCH est réduit.

9. Procédé d'attribution de ressource selon la revendication 6 ou 7, dans lequel dans ladite autre attribution de ressources, le nombre de codes de données attribués en tant que ladite autre ressource au canal de transmission de données en liaison descendante HS-PDSCH est réduit.

10. Procédé d'attribution de ressources selon la revendication 6 ou 7, dans lequel dans ladite attribution de ressource, un schéma de modulation de données attribué en tant que ladite autre ressource au HS-PDSCH (canal de transmission de données en liaison descendante) est modifié.

11. Programme d'attribution de ressources qui amène un ordinateur servant d'appareil de station de base radio à exécuter le procédé selon l'une quelconque des revendications 6 à 10.
